# EUROPÄISCHE PATENTANMELDUNG

(11) **EP 4 800 280 A1**
(43) Veröffentlichungstag der Anmeldung: **02.09.2026**
(21) Anmeldenummer: 25160920.2
(22) Anmeldetag: 28.02.2025
(51) Int. Cl.: F16L 37/34

(54) **KUPPLUNGSELEMENT FÜR EINE HYDRAULIKKUPPLUNG**

(71) Anmelder: WALTER STAUFFENBERG GMBH & CO. KG, 58791 Werdohl (DE)
(72) Erfinder: Laufer, Klaus, 58540 Meinerzhagen (DE); Firus, Artur, 58636 Iserlohn (DE)
(74) Vertreter: Patentanwälte Dörner & Kötter PartG mbB

(57) **Zusammenfassung**

Die Erfindung betrifft ein Kupplungselement, insbesondere Kupplungsmuffe (1) oder Kupplungsstecker (6), für eine Hydraulikkupplung an einer Druckmittelleitung, mit einem Gehäuse (2, 7) und einer Dichteinheit (3, 8), wobei das Gehäuse (2, 7) einen Strömungskanal (28, 75) für ein Druckmittel und eine Kupplungsachse (A) aufweist und aus einem Basisköper (21, 71) und wenigstens einem mit diesem formschlüssig und/oder kraftschlüssig verbundenen Hülsenkörper(24, 25, 73) gebildet ist, wobei der Basiskörper (21, 71) und ein Hülsenkörper (25, 73) des wenigstens einen Hülsenkörpers einen ringförmigen Kanal (53, 93) mit vorzugsweise rechteckigem Querschnitt begrenzen, in dem ein Dichtring, vorzugsweise ein O-Ring (51, 91) zur Abdichtung eines zwischen dem Basiskörper (21, 71) und dem Hülsenkörper (25, 73) begrenzten Dichtspalts (55, 95) angeordnet ist, und wobei der Basiskörper (21, 71) und der Hülsenkörper (25, 73) jeweils eine ringförmige Vertiefung aufweisen, wodurch jeweils eine Stufe (23, 26, 72, 741) gebildet ist, deren beiden Flanken sich zu einer ersten Seitenwand (531, 741) des Kanals (53, 93) ergänzen, die an der dem anliegenden Fluiddruck gegenüberliegenden Seite des Dichtrings angeordnet ist und zwischen denen der abzudichtende Dichtspalt (55, 95) mündet.

## Beschreibung

Die Erfindung betrifft ein Kupplungselement, insbesondere eine Kupplungsmuffe für eine Hydraulikkupplung an einer Druckmittelleitung nach dem Oberbegriff des Patentanspruchs 1.

Hydraulikkupplungen bestehen aus einer Kombination einer Kupplungsmuffe und einem mit dieser verbindbaren Kupplungsstecker. Sie werden eingesetzt, um zwei Abschnitte einer Druckmittelleitung zu verbinden, über die hydraulisch betriebene Geräte, beispielsweise Werkzeuge oder Anbaugeräte mit einer Hydraulikquelle, beispielsweise eine landwirtschaftliche Maschine oder eine Baumaschine, verbunden werden. Allgemein wird über eine Hydraulikkupplung Strömungsenergie von einer Maschine zu einem Arbeitsgerät übertragen. Hierbei entstehen hohe statische und dynamische Belastungen.

Die Höhe der Strömungsenergie ist abhängig von Druck und Volumenstrom. Da hohe Volumenströme immer auch zu Leistungsverlusten durch Reibung führen, ist es für die Effizienz des Systems besser, hohe Leistungen durch hohe Drücke bei geringeren Volumenströmen zu übertragen. Vor diesem Hintergrund kommt der Druckbeständigkeit einer Fluidkupplung eine entscheidende Bedeutung zu.

Da Fluidkupplungen auch in Bypässen eingesetzt, das heißt in einem Abzweig einer Leitung eingesetzt werden, können diese auch im ungekuppelten Zustand dynamisch druckbelastet sein. Daraus folgt, dass die Kupplungen sowohl im gekuppelten als auch im ungekuppelten Zustand eine hohe Druckbeständigkeit aufweisen müssen.

Aus dem Stand der Technik sind sogenannte flachdichtende Kupplungsmuffen und Kupplungsstecker bekannt, die sich dadurch auszeichnen, dass im nicht verbundenen - nicht gekuppelten - Zustand durch die Bauteile des Kupplungssteckers oder der Kupplungsmuffe im Verbindungsschnittstellenbereich eine plane und geschlossene Fläche gebildet wird. Dadurch wird der Eintritt von Schmutz in das Gehäuse und zwischen die Bauteile verhindert sowie der Verlust von Druckmittel zuverlässig vermieden.

Das Einkuppeln einer Hydraulikkupplung, also das Herstellen einer formschlüssigen Verbindung zwischen einer Kupplungsmuffe und einem Kupplungsstecker, erfolgt üblicherweise durch Einstecken der Kupplungsstecker in eine Kupplungsmuffe, wobei durch die beim Einstecken aufgebrachte Kraft sowohl jeweils ein Ventil geöffnet wird, um den Strömungskanal des Kupplungssteckers mit dem Strömungskanal der Kupplungsmuffe strömungstechnisch zu verbinden. Zugleich wird durch diese eine formschlüssige Verbindung zwischen Kupplungsstecker und Kupplungsmuffe hergestellt, um die Verbindung bzw. den eingekuppelten Zustand zu stabilisieren. Im ungekuppelten Zustand sind die Strömungskanäle von Kupplungsmuffe und Kupplungsstecker gegenüber der Umwelt abgedichtet.

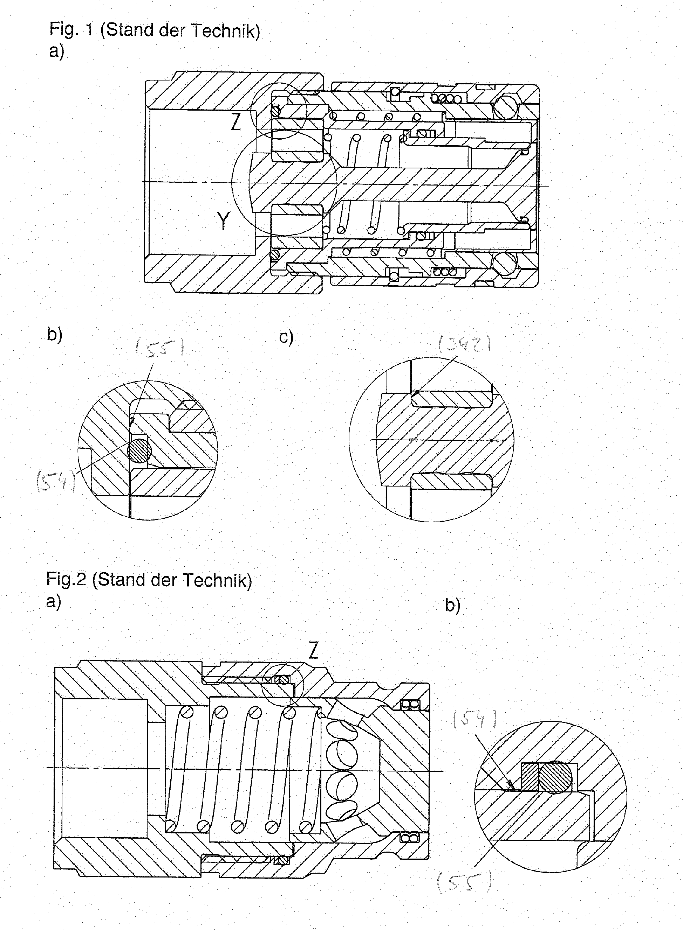

In Figur 1 ist eine im Stand der Technik bekannte Kupplungsmuffe, in Figur 2 ein im Stand der Technik bekannter Kupplungsstecker schematisch dargestellt. Eines der Kupplungselemente, vorliegend die Kupplungsmuffe weist einen feststehenden Stößel und eine bewegliche Ventilhülse auf. Die Ventilhülse ist im geschlossenen Zustand gegen den Stößel und gegen den fluidführenden Strömungskanal der Kupplungshälfte abgedichtet. Im gekuppelten Zustand ist die Ventilhülse gegen die Strömungskanäle beider Kupplungselemente abgedichtet. Der feststehende Stößel ist in einer Stößelführung gehalten, die mindestens zwei Halteelemente umfasst. Das andere der Kupplungselemente, vorliegend der Kupplungsstecker weist einen beweglichen Ventilstößel auf, der im geschlossenen Zustand gegen den Strömungskanal abgedichtet ist.

Die Strömungskanäle beider Kupplungshälften sind an ihrem dem jeweiligen Ventilstößen abgewandten Ende durch ein Anschlussteil begrenzt, an das eine Fluidleitung angeschlossen werden kann. Die Verbindung der beiden Kupplungselemente erfolgt bekanntermaßen über eine auf einem Kupplungselement drehbewegliche Schraubhülse, die auf ein Gewinde des zweiten Kupplungselements aufschraubbar ist. Alternativ weist ein Kupplungselement eine axial verschiebliche Hülse sowie radial bewegliche Rastkörper, beispielsweise Kugeln auf, wobei an dem anderen Kupplungselement außen eine umlaufende Nut vorhanden ist, in die die Rastkörper im gekuppelten Zustand eingreifen.

Die Abdichtungen zwischen zwei Strömungskanal begrenzenden Bauteilen sind entscheidend für die Druckbeständigkeit der Hydraulikkupplung. Als Dichtungen kommen hier häufig Weichdichtungen zum Einsatz, die beispielsweise aus Elastomeren oder auch Kunststoffen wie thermoplastisches Polyurethan hergestellt sind. Neben der Weichdichtung werden häufig zusätzlich Stützringe eingesetzt, die aus härterem Material, wie beispielsweise PTFE oder anderen Kunststoffen wie Polyamid hergestellt sind. Bei den Abdichtungen werden zwei grundsätzlich zu unterscheidende Ausführungsformen unterschieden.

Die eine Form ist die axiale Abdichtung, bei der in einem der gegeneinander abzudichtenden Bauteilen stirnseitig eine Nut eingebracht ist, in der mindestens ein Dichtelement positioniert ist. Die Dichtelemente dichten gegen den Nutengrund ab. Das zweite Bauteil hat an der Stelle der axialen Nut des ersten Bauteils eine ebene Fläche, gegen die die Dichtelemente abdichten. Von der äußeren Schulter der Nut des ersten Bauteils und der Ebenen Fläche des zweiten Bauteils wird der druckabgewandte Dichtspalt gebildet, dessen Breite durch Verspannung der beiden Bauteile gegeneinander gleich Null ist. Bei Anliegen einer Druckbelastung kann sich die Breite dieses Dichtspalts jedoch bedingt durch elastische Verformung der Bauteile vergrößern.

Die zweite Form ist die radiale Abdichtung, bei der entweder im äußeren Bauteil eine radiale Innennut eingebracht ist oder im inneren Bauteil eine radiale Außennut. In diesen Nuten sind die Dichtelemente positioniert, die gegen den Nutengrund dichten. Das jeweils zweite Teil hat im Fall der radialen Innennut eine zylindrische Außenfläche auf der die Dichtelemente dichten. Im Falle der radialen Außennut hat das zweite Teil eine zylindrische Innenfläche auf der die Dichtelemente dichten. Der Dichtspalt auf der druckabgewandten Seite ist durch die zylindrische Innen- oder Außenfläche des einen Bauteils und einer Nutschulter des zweiten Bauteils gebildet.

Bei hohen, insbesondere dynamischen Druckbelastungen kann es bei beiden Abdichtungsformen zu einer Spaltextrusion der Weichdichtungen und ggf. der Stützringe in den auf deren druckabgewandte Seite befindlichen Dichtspalt kommen. Spaltextrusion ist ein fortschreitender Prozess, der schließlich zur Undichtigkeit führen kann. Hierdurch ist die Druckbeständigkeit und der maximal mögliche Betriebsdruck beeinflusst.

Hier will die Erfindung Abhilfe schaffen. Der Erfindung liegt die Aufgabe zu Grunde, ein Kupplungselement für eine Hydraulikkupplung an einer Druckmittelleitung bereitzustellen, dessen Druckbeständigkeit und maximal möglicher Betriebsdruck erhöht ist. Gemäß der Erfindung wird diese Aufgabe durch ein Kupplungselement mit den Merkmalen des Patentanspruchs 1 gelöst.

Mit der Erfindung ist ein Kupplungselement für eine Hydraulikkupplung an einer Druckmittelleitung geschaffen, dessen Druckbeständigkeit und maximal möglicher Betriebsdruck erhöht ist. Dadurch, dass der Basiskörper und der Hülsenkörper jeweils eine ringförmige Vertiefung aufweisen, wodurch jeweils eine Stufe gebildet ist, deren beiden Flanken sich zu einer ersten Seitenwand des Kanals ergänzen, die an der dem anliegenden Fluiddruck gegenüberliegenden Seite des Dichtrings angeordnet ist und zwischen denen der abzudichtende Dichtspalt mündet, liegt der dem Druck abgewandte, durch den Dichtring abzudichtende Dichtspalt nicht wie im Stand der Technik auf einer Verlängerung der Dichtfläche, gegen die der Dichtring abdichtet, sondern versetzt zu dieser.

Durch die Stufe an den beiden Dichtflächen der Bauteile wird erreicht, dass der Spalt auf der druckabgewandten Seite sich nicht unmittelbar an die Dichtfläche anschließt. Dies hat zur Folge, dass selbst im Falle einer Spaltextrusion kein Material des Dichtrings, das zur Dichtfläche hin abdichtet, in den Dichtspalt extrudiert, was unmittelbar eine Beeinträchtigung der Vorspannung der Dichtung zur Folge hätte. Vielmehr kann lediglich Material der Dichtung oder auch des Stützrings in den Dichtspalt extrudieren, das einen gewissen Abstand zur Dichtfläche hat. Hierdurch ist eine Beeinträchtigung der Vorspannung des Dichtrings gegen die Dichtfläche wirksam verhindert.

In Weiterbildung der Erfindung ist die Vertiefung in dem Basiskörper oder dem Hülsenkörper durch eine Nut gebildet, deren gegenüberliegenden Flanken eine unterschiedliche Höhe aufweisen. Hierdurch ist eine axiale Fixierung des Dichtrings sowie ein Versatz zwischen Dichtfläche und Dichtspalt erzielt.

In Ausgestaltung der Erfindung weist die dem Dichtspalt gegenüberliegende zweite Nutenflanke der Nut eine größere Höhe auf, als die gegenüberliegende erste Nutenflanke, wobei die Höhe der zweiten Nutenflanke vorzugsweise der Höhe der ersten Seitenwand des Kanals entspricht. Hierdurch ist die axiale Anlagefläche für den Dichtring maximiert.

In weiterer Ausgestaltung der Erfindung ist die zweite Nutenflanke durch ein zusätzliches Bauteil gebildet. Hierdurch ist eine beschädigungsfreie Montage des Dichtrings ermöglicht.

In Weiterbildung der Erfindung ist axial neben dem Dichtring vorzugsweise an seiner dem Dichtspalt zugewandten Seite anliegend ein Stützring angeordnet. Hierdurch ist einer druckbedingten Verformung des Dichtrings entgegengewirkt.

In Ausgestaltung der Erfindung ist das Kupplungselement eine Kupplungsmuffe, wobei die den abzudichtenden Dichtspalt aufweisende erste Seitenwand des Kanals sich parallel zur Kupplungsachse erstreckt, wobei die zweite Seitenwand des Kanals durch eine Stößelführung gebildet ist, die einen Ventilstößel aufnimmt. Hierdurch ist eine zuverlässige Abdichtung der Stößelführung gegen das Gehäuse des Kupplungselements erzielt. Bevorzugt ist die Stößelführung aus wenigstens zwei Halteelementen gebildet.

In weiterer Ausgestaltung der Erfindung weist der Ventilstößel wenigstens eine Nut mit einer dem Ventilkolben zugewandten ersten Nutenflanke und einer dieser gegenüberliegenden, dem Ventilkolben abgewandten zweiten Nutenflanke auf, in die die Stößelführung eingreift, wodurch Stößelführung und Ventilstößel formschlüssig verbunden sind, wobei die dem Ventilkopf des Ventilstößels abgewandte zweite Nutflanke der wenigstens einen Nut konisch sich nach außen erweiternd ausgebildet ist. Hierdurch ist eine ortsfeste Halterung des Ventilstößels bewirkt, wobei Spannungen, die sich durch Kerbwirkungen der Nut ergeben können und die bei höheren Drücken oder auch dynamischen Belastungen zum Bruch führen können, vermindert sind. Durch die konische Auflage erhöht sich einerseits die Auflagefläche des Stößels auf den Halteelementen und andererseits verbessert sich der Kraftfluss im Stößel. Auch in den Halteelementen kann so die maximale Spannung reduziert werden.

Bevorzugt weist die zweite Nutenflanke der wenigstens einen Nut einen Konuswinkel von zwischen 50° und 140°, besonders bevorzugt von zwischen 60° und 130°, insbesondere von 70° und 120° auf. Der Konuswinkel ist der Winkel eines gedachten Konus, auf dem die erste Nutflanke der wenigstens einen Nut liegt.

In einer weiteren Ausgestaltung der Erfindung ist das Kupplungselement ein Kupplungsstecker, wobei die den abzudichtenden Dichtspalt aufweisende erste Seitenwand des Kanals sich orthogonal zur Kupplungsachse erstreckt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Kupplungsmuffe einer Hydraulikkupplung nach dem Stand der Technik
a) im Längsschnitt;
b) im Detailausschnitt Z (Dichtungsbereich);
c) im Detailausschnitt Y (Stößelaufnahme);
- Figur 2: die schematische Darstellung eines Kupplungssteckers einer Hydraulikkupplung nach dem Stand der Technik
a) im Längsschnitt;
b) im Detailausschnitt Z (Dichtungsbereich);
- Figur 3: die schematische Darstellung einer Kupplungsmuffe einer Hydraulikkupplung
a) im Längsschnitt;
b) im Detailausschnitt Z (Dichtungsbereich);
c) im Detailausschnitt Y (Stößelaufnahmebereich Y)
- Figur 4: die schematische Darstellung eines Kupplungssteckers einer Hydraulikkupplung
a) im Längsschnitt;
b) im Detailausschnitt Y (Dichtungsbereich);
- Figur 5: die Darstellung einer Hydraulikkupplung mit einer Kupplungsmuffe und einem mit dieser verbundenen Kupplungsstecker;
- Figur 6: die Detaildarstellung des Ausschnitts X der Hydraulikkupplung aus Figur 5.

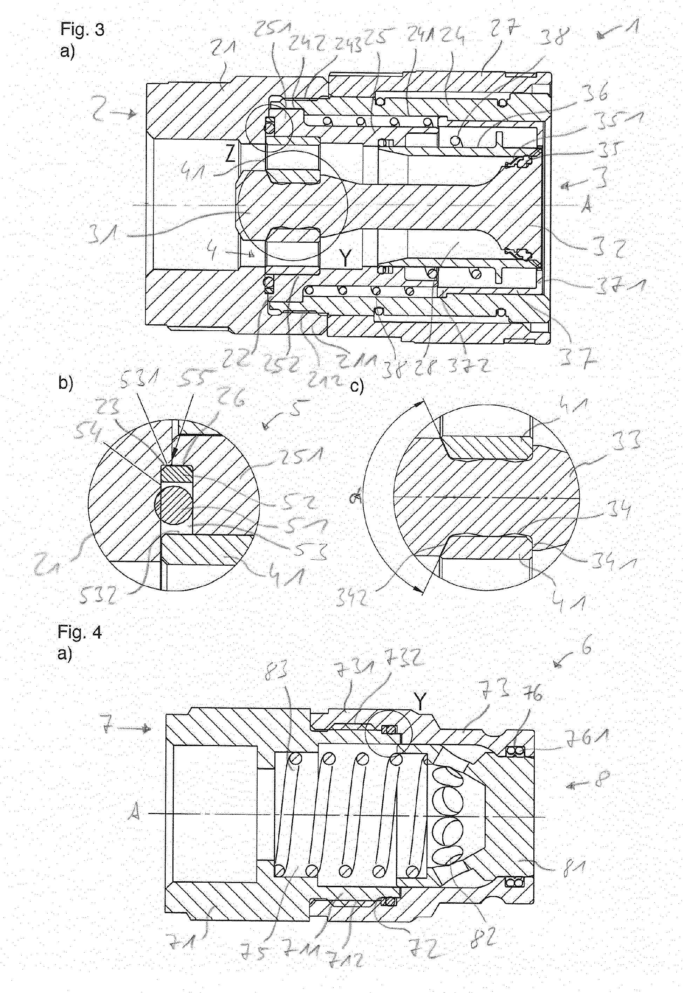

Die als Ausführungsbeispiel gemäß Figur 3 gewählte Kupplungsmuffe 1 umfasst ein Gehäuse 2 mit einer Dichteinheit 3. Das Gehäuse 2 begrenzt einen Strömungskanal 28 für ein Druckmittel, wobei sich das Gehäuse 2 im Wesentlichen rotationssymmetrisch um eine Kupplungsachse A erstreckt.

Das Gehäuse 2 umfasst einen Basiskörper 21, einen mit diesem verbundenen ersten Hülsenkörper 24 sowie ein von dem ersten Hülsenkörper 24 umgebenen sowie zwischen dem Basiskörper 21 und dem ersten Hülsenkörper 24 axial eingespannten zweiten Hülsenkörper 25. Außen ist auf dem ersten Hülsenkörper 24 eine Verschlusshülse 27 verschiebbar angeordnet. Zwischen dem zweiten Hülsenkörper 25 und dem Basiskörper 21 ist weiterhin eine Stößelführung 4 axial eingespannt, die im Ausführungsbeispiel aus zwei Halteelementen 41 gebildet ist und die den Ventilstößel 31 der Dichteinheit 3 aufnimmt.

Der Basiskörper 21 des Gehäuses 2 ist im Wesentlichen hohlzylindrisch ausgebildet und weist an seinem dem ersten Hülsenkörper 24 zugewandten Ende einen innendurchmessererweiterten Abschnitt 211 auf, der mit einem Innengewinde 212 versehen ist. Durch den innendurchmessererweiterten Abschnitt 211 ist eine Stirnfläche 22 begrenzt, in die eine ringförmige erste Stufe 23 eingebracht ist.

Der erste Hülsenkörper 24 weist an seiner dem Ventilstößel 31 zugewandten Innenseite einen innendurchmessererweiterten ersten Absatz 241 auf, der endseitig in einen wiederum innendurchmessererweiterten zweiten Absatz 242 übergeht. Dem zweiten Absatz 242 gegenüberliegen ist der erste Hülsenkörper 24 mit einem Außengewinde 243 versehen.

Der zweite Hülsenkörper 25 weist an seinem dem Basiskörper 21 zugewandten Ende einen nach außen kragenden Ringflansch 251 auf, der endseitig eine ringförmige zweite Stufe 26 aufweist. Dem Ringflansch 251 gegenüberliegend weist der zweite Hülsenkörper 25 einen innendurchmessererweiterten dritten Absatz 252 auf, in den sich die Halteelemente 41 der Stößelführung 4 erstrecken.

Der erste Hülsenkörper 25 ist mit seinem Außengewinde in das Innengewinde 212 des Basiskörpers 21 eingeschraubt, wobei der erste Hülsenkörper 25 den sich in seinen zweiten Absatz 242 erstreckenden Ringflansch 251 des zweiten Hülsenkörpers 25 gegen die Stirnfläche 22 des Basiskörpers 21 verspannt. Zugleich werden die in den innendurchmessererweiterten dritten Absatz 252 ragenden Abschnitte der Halteelemente 41 gegen die Stirnfläche 22 des Basiskörpers 21 verspannt.

Hierbei ist die zweite Stufe 26 des zweiten Hülsenkörpers 25 gegenüberliegend der ersten Stufe 23 des Basiskörpers 21 angeordnet, wobei sich die beiden Flanken der beiden Stufen 23, 26 zu einer ersten Seitenwand 531 ergänzen, zwischen denen ein Dichtspalt 55 mündet. Parallel zu dieser ersten Seitenwand 531 sind die Halteelemente 41 angeordnet, die eine zweite Seitenwand 532 des zwischen dem Basiskörper 21, dem zweiten Hülsenkörper 25 und den Halteelementen 41 der Stößelführung 4 gebildeten ringförmigen Kanals 53 ausbilden. In dem Kanal 53 ist an der ersten Seitenwand 531 anliegend ein Stützring 52 sowie an diesem anliegend ein O-Ring 51 angeordnet. Stützring 52 und O-Ring 51 sind gegen die von der ersten Stufe 23 und dem beiden Halteelementen 41 begrenzten Dichtfläche 54 des Basiskörpers 21 vorgespannt. Die Dichtfläche 54 ist dabei axial versetzt zu dem Dichtspalt 55 angeordnet. Die so ausgebildete Dichtanordnung 5 ist in Figur 3 b) gezeigt.

Die Dichteinheit 3 umfasst den von der Stößelführung 4 aufgenommenen Ventilstößel 31, eine zwischen dem zweiten Hülsenkörper 25 und dem Ventilstößel verschiebbar angeordnete Ventilhülse 36 zur dichtenden Anlage an eine an dem Ventilkolben 32 des Ventilstößels 31 angeordneten und über eine Kammerungshülse 351 fixierten Kolbendichtung 35 sowie eine zwischen dem ersten Hülsenkörper 24 und dem zweiten Hülsenkörper 25 verschiebbar angeordnete Druckhülse 37. Die Ventilhülse 36 ist über eine Druckfeder 38 gegen die Kolbendichtung 35 vorgespannt. Die Druckhülse 37 weist an ihrem der Stößelführung 4 abgewandten Ende einen ringförmigen Kragen 371 auf, der mit der nach außen gerichteten Seite des Ventilkolbens 32 eine gemeinsame Ebene ausbildet. An ihrem dem Kragen 371 abgewandten Ende ist an der Druckhülse 37 ein umlaufender nach außen kragender Steg 372 angeordnet, der an dem ersten Absatz 241 des ersten Hülsenkörpers 24 anliegt, gegen den er über eine weitere Druckfeder 38 vorgespannt ist.

In einem endseitigen Bereich des Ventilstößels 31 ist in dem Stößelschaft 33 eine umlaufende Nut 34 eingebracht, in die jeweils zwei Halteelemente 41 der Stößelführung 4 eingesetzt sind. Die der dem Ventilkolben 32 zugewandte erste Nutenflanke 341 der Nut 34 ist orthogonal zur Mittelachse des Stößelschaftes 33 angeordnet. Die den ersten Nutenflanke 341 gegenüberliegende zweite Nutenflanke 342 der Nut 34 ist nach außen geneigt ausgebildet und bildet einen Konus, der im Ausführungsbeispiel einen Konuswinkel α von 130° aufweist. Die Außenkontur der in die Nut 34 eingesetzten Abschnitte der Halteelemente 41 sind dabei entsprechend der Innenkontur der Nut 34 ausgebildet (vgl. Figur 3 c)). Der Ventilstößel 31 ist über die Stößelführung 4 ortsfest in dem Gehäuse 2 gehalten. Anstelle der umlaufenden Nut 34 können auch mehrere umlaufend in den Stößelschaft 33 versetzt beabstandet zueinander angeordnete Nuten angeordnet sein, die jeweils ein Halteelement aufnehmen und deren zweite Nutenflanke jeweils nach außen geneigt ausgebildet sind und auf einem gemeinsamen gedachten Konus liegen.

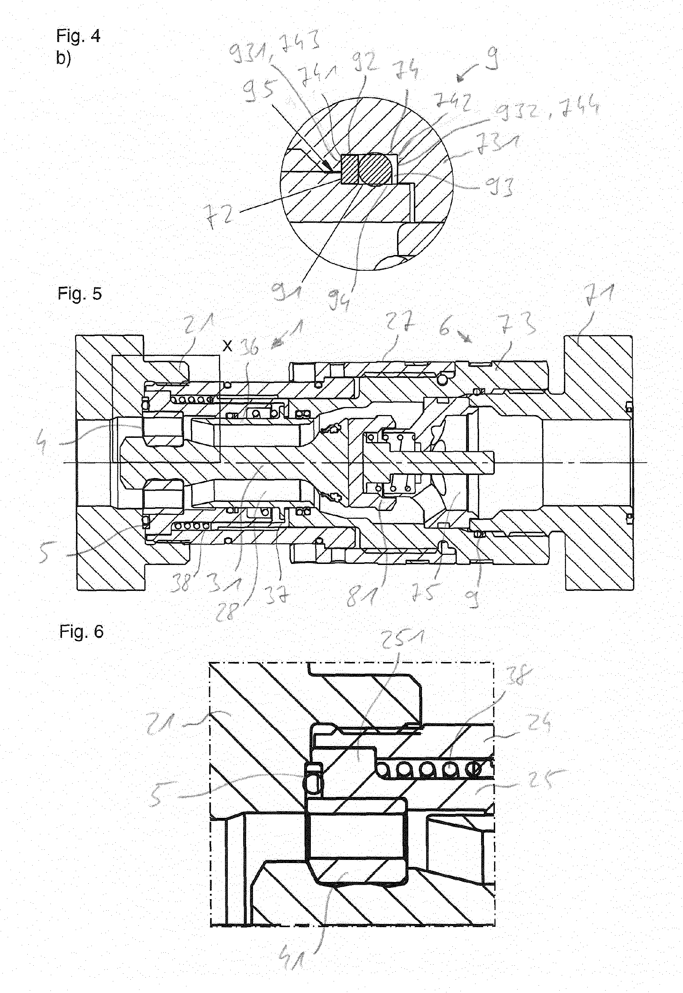

Der als Ausführungsbeispiel gemäß Figur 4 gewählte Kupplungsstecker 6 umfasst ein Gehäuse 7, mit einer Dichteinheit 8. Das Gehäuse 7 begrenzt einen Strömungskanal 75 für ein Druckmittel, wobei sich das Gehäuse 7 im Wesentlichen rotationssymmetrisch um eine Kupplungsachse A erstreckt.

Das Gehäuse 7 ist aus einem Basiskörper 71 gebildet, auf den eine Steckerhülse 73 aufgeschraubt ist. Der Basiskörper 71 ist im Wesentlichen hohlzylindrisch ausgebildet und weist endseitig einen außendurchmesserreduzierten Abschnitt 711 mit einem Außengewinde 712 auf, an das sich endseitig eine erste Stufe 72 anschließt. Die Steckerhülse 73 weist an ihrem dem Basiskörper 71 zugewandten Ende einen innendurchmessererweiterten Abschnitt 731 auf, der mit einem Innengewinde 732 versehen ist. An das Innengewinde schließt sich eine Nut 74 an, die durch eine erste Nutenflanke 743 und eine dieser gegenüberliegenden zweite Nutenflanke 744 begrenzt ist und durch die eine zweite Stufe 741 und dieser gegenüberliegend eine dritte Stufe 742 gebildet ist. An ihrem dem innendurchmessererweiterten Abschnitt 731 gegenüberliegenden Ende ist in der Steckerhülse eine Ringnut 76 eingebracht, in die eine mit zwei O-Ringen 761 vorgespannte Profildichtung zur Abdichtung gegenüber dem Ventilkolben 81 der Dichteinheit 8 eingebracht ist.

Die Steckerhülse 73 ist mit ihrem Innengewinde 732 auf das Außengewinde 712 des Basiskörpers 71 aufgeschraubt. Hierbei ist die zweite Stufe 741 der Steckerhülse 73 gegenüberliegend der ersten Stufe 72 des Basiskörpers 71 angeordnet, wobei sich die beiden Flanken der beiden Stufen 72, 741 zu einer ersten Seitenwand 931 ergänzen, zwischen denen ein Dichtspalt 95 mündet.

Parallel zu dieser ersten Seitenwand 931 ist die durch die Nut 74 gebildete dritte Stufe 742 angeordnet, wobei die zweite Nutenflanke 744 der Nut 74 eine zweite Seitenwand 932 des zwischen dem aussendurchmesserreduzierten Abschnitt 711 des Basiskörpers 71 und dem innendurchmessererweiterten Abschnitt 731 der Steckerhülse 71 gebildeten ringförmigen Kanals 93 ausbildet. Die Breite der dritten Stufe 742 entspricht dabei der Breite der durch die erste Stufe 72 des Basiskörpers 71 und der zweiten Stufe 741 der Steckerhülse gebildeten ersten Seitenwand 931 des Kanals 93.

In dem Kanal 93 ist an der ersten Seitenwand 931 anliegend ein Stützring 92 sowie an diesem anliegend ein O-Ring 91 angeordnet. Stützring 92 und O-Ring 91 sind gegen die von der erste Stufe 72 des Basiskörpers 71 und der zweiten Stufe 741 der Steckerhülse 73 begrenzten Dichtfläche 94 des Basiskörpers 71 vorgespannt. Die Dichtfläche 94 ist dabei radial versetzt zu dem Dichtspalt 95 angeordnet. Die so ausgebildete Dichtanordnung 9 ist in Figur 4 b) gezeigt.

Die Dichteinheit 8 umfasst einen Ventilkolben 81, der in dem Gehäuse 7 verschiebbar geführt und über eine Druckfeder 83 in die Schließstellung vorgespannt ist. In dem Ventilkolben 81 sind Durchtrittsöffnungen 82 zum Durchtritt von Druckmittel aus dem Strömungskanal 75 vorhanden. In Schließstellung des Ventilkolbens 81 liegt die in der Ringnut 76 der Steckerhülse 73 angeordneten über die beiden O-Ringen 761 vorgespannte Profildichtung dichtend an dem Ventilkolben 81 an.

In Figur 5 ist schematisch eine Kupplung mit einer Kupplungsmuffe 1 und einem Kupplungsstecker 6 gezeigt. Durch Einstecken der Kupplungssteckers 6 in die Kupplungsmuffe 1 wird zum einen die Druckhülse 37 der Kupplungsmuffe 1 durch die Steckerhülse 73 des Kupplungssteckers 6 entgegen der Vorspannung der Druckfeder 38 in Richtung des Basiskörpers 21 bewegt, wobei sie die Ventilhülse 36 mitnimmt. Zum anderen wird der Ventilkolben 81 des Kupplungssteckers 6 durch den feststehenden Ventilstößel 31 der Kupplungsmuffe 1 entgegen der Vorspannung der Druckfeder 38 bewegt, wodurch der Strömungskanal 28 der Kupplungsmuffe 1 mit dem Strömungskanal 75 des Kupplungssteckers 6 verbunden ist.

## Patentansprüche

1. Kupplungselement, insbesondere Kupplungsmuffe (1) oder Kupplungsstecker (6), für eine Hydraulikkupplung an einer Druckmittelleitung, mit einem Gehäuse (2, 7) und einer Dichteinheit (3, 8), wobei das Gehäuse (2, 7) einen Strömungskanal (28, 75) für ein Druckmittel und eine Kupplungsachse (A) aufweist und aus einem Basisköper (21, 71) und wenigstens einem mit diesem formschlüssig und/oder kraftschlüssig verbundenen Hülsenkörper(24, 25, 73) gebildet ist, wobei der Basiskörper (21, 71) und ein Hülsenkörper (25, 73) des wenigstens einen Hülsenkörpers einen ringförmigen Kanal (53, 93) mit vorzugsweise rechteckigem Querschnitt begrenzen, in dem ein Dichtring, vorzugsweise ein O-Ring (51, 91) zur Abdichtung eines zwischen dem Basiskörper (21, 71) und dem Hülsenkörper (25, 73) begrenzten Dichtspalts (55, 95) angeordnet ist, **dadurch gekennzeichnet, dass** der Basiskörper (21, 71) und der Hülsenkörper (25, 73) jeweils eine ringförmige Vertiefung aufweisen, wodurch jeweils eine Stufe (23, 26, 72, 741) gebildet ist, deren beiden Flanken sich zu einer ersten Seitenwand (531, 931) des Kanals (53, 93) ergänzen, die an der dem anliegenden Fluiddruck gegenüberliegenden Seite des Dichtrings angeordnet ist und zwischen denen der abzudichtende Dichtspalt (55, 95) mündet.

2. Kupplungselement nach Anspruch 1, **dadurch gekennzeichnet, dass** die Vertiefung in dem Basiskörper (21, 71) oder dem Hülsenkörper (25, 73) durch eine Nut (74) gebildet ist, deren gegenüberliegenden Nutenflanken (743, 744) eine unterschiedliche Höhe aufweisen.

3. Kupplungselement nach Anspruch 2, **dadurch gekennzeichnet, dass** die dem Dichtspalt (55, 95) gegenüberliegende zweite Nutenflanke (744) der Nut (74) eine größere Höhe aufweist, als die gegenüberliegende erste Nutenflanke (743), wobei die Höhe der zweiten Nutenflanke (743) vorzugsweise der Höhe der ersten Seitenwand (531, 931) des Kanals (53, 93) entspricht.

4. Kupplungselement nach Anspruch 3, **dadurch gekennzeichnet, dass** die zweite Nutenflanke (744) durch ein separates Bauteil gebildet ist.

5. Kupplungselement nach einem der vorgenannten Ansprüche, **dadurch gekennzeichnet, dass** axial neben dem Dichtring vorzugsweise an seiner dem Dichtspalt (55, 95) zugewandten Seite anliegend ein Stützring (52, 92) angeordnet ist.

6. Kupplungselement nach einem der vorgenannten Ansprüche, **dadurch gekennzeichnet, dass** dieses eine Kupplungsmuffe (1) ist, wobei die den abzudichtenden Dichtspalt (55) aufweisende erste Seitenwand (531) des Kanals (53) sich parallel zur Kupplungsachse (A) erstreckt, wobei die zweite Seitenwand (532) des Kanals (53) durch eine Stößelführung (4) gebildet ist, die einen Ventilstößel (31) aufnimmt.

7. Kupplungselement nach Anspruch 6, **dadurch gekennzeichnet, dass** die Stößelführung (4) aus wenigstens zwei Halteelementen (41) gebildet ist.

8. Kupplungselement nach Anspruch 6 oder 7, **dadurch gekennzeichnet, dass** der Ventilstößel (31) wenigstens eine Nut (34) mit einer dem Ventilkolben (32) zugewandten ersten Nutenflanke (341) und einer dieser gegenüberliegenden, dem Ventilkolben (32) abgewandten zweiten Nutenflanke (342) aufweist, in die die Stößelführung (4) eingreift, wodurch Stößelführung (4) und Ventilstößel (31) formschlüssig verbunden sind, wobei die dem Ventilkolben (32) des Ventilstößels (31) abgewandte zweite Nutflanke (342) der wenigstens einen Nut (34) konisch sich nach außen erweiternd ausgebildet ist.

9. Kupplungselement nach Anspruch 8, **dadurch gekennzeichnet, dass** die zweite Nutflanke (342) der wenigstens einen Nut (34) einen Konuswinkel von zwischen 50° und 140°, bevorzugt von zwischen 60° und 130°, besonders bevorzugt von zwischen 70° und 120° aufweist.

10. Kupplungselement nach einem der Ansprüche 1 bis 5, **dadurch gekennzeichnet, dass** dieses ein Kupplungsstecker (6) ist, wobei die den abzudichtenden Dichtspalt (95) aufweisende erste Seitenwand (931) des Kanals (93) sich orthogonal zur Kupplungsachse (A) erstreckt.
